# EUROPÄISCHE PATENTSCHRIFT

(11) **EP 0 501 202 B1**
(45) Veröffentlichungstag und Bekanntmachung des Hinweises auf die Patenterteilung: **05.10.1994**
(21) Anmeldenummer: 92102051.7
(22) Anmeldetag: 07.02.1992
(51) Int. Cl.: A01C 17/00, A01C 15/00, A01D 75/20

(54) **Schleuderdüngerstreuer**
Fertilizer broadcaster
Epandeur d'engrais centrifuge

(30) Priorität: 23.02.1991 DE 4105805; 26.03.1991 DE 4109846
(43) Veröffentlichungstag der Anmeldung: 02.09.1992
(73) Patentinhaber: Amazonen-Werke H. Dreyer GmbH & Co. KG, D-49205 Hasbergen (DE)
(72) Erfinder: Dreyer, Heinz, Dr. Dipl.-Ing., W-4507 Hasbergen (DE)
(74) Vertreter: Grünecker, Kinkeldey, Stockmair & Schwanhäusser Anwaltssozietät

(56) Entgegenhaltungen:
- EP-A- 0 376 013
- DE-A- 3 902 927
- DE-U- 8 407 525

## Beschreibung

Die Erfindung betrifft einen Schleuderdüngerstreuer gemäß des Oberbegriffes des Patentanspruches 1.

Schleuderdüngerstreuer gemäß des Oberbegriffes des Anspruches 1, die einen Bügel, der meistens als Schutzbügel ausgebildet ist, sind in der Praxis bekannt. Diese Schutzbügel befinden sich in der Draufsicht gesehen außerhalb der äußeren Umlaufbahn der äußeren Teile der Schleuderscheiben, so daß die Verletzungsgefahr, die von den drehenden Schleuderscheiben ausgeht, gebannt ist. Durch die Schutzbügel wird jedoch die Zugänglichkeit zu den Schleuderscheiben und zu den Einstellorganen für die Dosierorgane behindert.

Der Erfindung liegt die Aufgabe Zugrunde, hier Abhilfe zu schaffen.

Diese Aufgabe wird erfindungsgemäß dadurch gelöst, daß der Bügel Zumindest teilweise wegnehmbar oder wegklappbar gegenüber den Schleuderscheiben ausgebildet ist. Infolge dieser Maßnahme wird auf einfachste Weise eine gute Zugänglichkeit zu den Schleuderscheiben und den im unteren Bereich des Schleuderdüngerstreuers angeordneten Einstellorganen erreicht. Dieses wird dadurch erreicht, daß der gesamte Bügel oder Teile davon gegenüber den Schleuderscheiben wegnehmbar oder wegklappbar sind. Hierbei sieht die Erfindung in einer Ausführungsform vor, daß der Schutzbügel an zwei Stellen getrennt ist, daß der mittlere hintere Teil des Bügels um eine quer zur Fahrtrichtung verlaufende Achse nach oben oder nach unten wegklappbar angeordnet ist. Hierdurch wird der Bügel nur in dem Bereich weggeklappt, der unbedingt erforderlich ist, um die Zugänglichkeit zu den Einstellorganen der Schleuderscheiben zu erreichen.

Eine weitere vorteilhafte Gestaltung bei einem wegklappbaren Bügel ergibt sich dadurch, daß die Gelenke, um welcher der Bügel klappbar angeordnet ist, als Friktionsgelenk ausgebildet ist. Hierdurch wird eine Verletzungsgefahr bei dem Herunterklappen des Bügels ausgeschaltet, weil der Bügel praktisch in jeder Stellung stehen bleibt und nicht selbststätig nach unten klappt.

Weiterhin ist vorgesehen, daß der Schutzbügel in seiner Schutz- und Arbeitsstellung so verriegelt ist, daß zumindest alle horizontalen Kräfte (Stöße durch die Fahrt) von einer Bügelseite auf die andere übertragen werden. Hierdurch wird bei einem geteilten Bügel erreicht, daß er weiterhin in sich stabil und verwindungssteif ausgebildet bleibt. Somit sind Verbiegungen des Schutzbügels bei kleineren und mittleren Kräften ausgeschlossen.

Damit der Schutzbügel als Rammschutz wirken kann, damit der Vorratsbehälter und andere Teile des Düngerstreuers nicht beschädigt werden, ist vorgesehen, daß der Schutzbügel in der Draufsicht gesehen den Vorratsbehälter zumindest seitlich und hinten überragt, so daß ein Rammschutz bei Toreinfahrten, Rangieren und Transport etc. gegeben ist.

Wenn der Schutzbügel nur zum Teil auf der Rückseite wegklebbar ist, so wird nur so viel von dem Schutzbügel weggeklappt, daß eine guter Zugang zu den Einstellorganen und zum Scheibenwechsel erreicht wird. Selbst dann, wenn der wegklappbare Teil nicht wieder in seinen Arbeitsstellung zurückgeklappt wird, so bleibt doch ein weitgehender Schutz, zumindest an den Seiten erhalten.

In einer weiteren Ausführung ist vorgesehen, daß der Schutzbügel nach unten klappbar ist. Hierdurch dient der nach unten weggeklappte Teil des Schutzbügels als Sicherheitsstütze, wenn der Düngerstreuer angehoben ist und im angehobenen Zustand die Maschine eingestellt werden soll.

Weiterhin ist vorgesehen, daß der Schutzbügel derart wegklappbar ist, so daß er als Trittstufe für die Bedienungsperson dienen kann. Weiterhin ist es möglich, zusätzliche Bügelteile an dem Schutzbügel anzuordnen, so daß eine Art "Leiter" geschaffen wird.

Dadurch, daß Zumindest Teile des Schutzbügels um eine zumindest annähernd in Fahrtrichtung verlaufende Schwenkachse nach unten in eine aufrechte Stellung schwenkbar sind, wird die Grundvoraussetzung dafür geschaffen, daß die nach unten geklappten Teile des Schutzbügels gleichzeitig die Stütz- oder Sicherheitselemente bilden, so daß der angehobene Schleuderdüngerstreuer, falls aus irgendeinem Grunde der Düngerstreuer absacken oder nach unten zu fallen drohen sollte, auf den nach unten geklappten Teile des Schutzbügels fällt, so daß der Düngerstreuer nicht ganz nach unten fallen kann. Eine sich unterhalb des Schleuderdüngerstreuers befindliche Person wird somit geschützt.

In einer Ausführungsform ist vorgesehen, daß der Schutzbügel in etwa in der Schleuderdüngerstreuermitte geteilt ist, und daß die beiden Teile des Schutzbügels um eine im äußeren Bereich des Schleuderdüngerstreuers liegende Schwenkachse nach unten schwenkbar sind. Somit erhält man zwei Abstützelemente.

Eine Arbeitserleichterung zum Austauschen der Schleuderscheiben wird dadurch erreicht, daß die an den Schutzbügel angeordneten Halterungen gleichzeitig als Sitz ausgebildet sind.

Eine einfache Einstellung des Schleuderdüngerstreuers in seiner Streustellung wird dadurch erreicht, daß die nach unten klappbaren Teile des Schutzbügels eine derartige Länge aufweisen, daß die Höhe des Schleuderdüngerstreuers im abgestellten Zustand auf diesen Schutzbügel der Lage der Anbauhöhe des Streuers für die Streubreite entspricht. Während der Montage und Einstellarbeiten wird man den Düngerstreuer so einstellen, daß die unteren Enden des Schutzbügels sich etwa 5 - 10 cm oberhalb der Bodenoberfläche befinden.

Weitere Einzelheiten der Erfindung sind den übrigen Unteransprüchen, der Beispielsbeschreibung und den Zeichnungen zu entnehmen. Hierbei zeigen
- Fig. 1: einen erfindungsgemäß ausgestalteten Schleuderdüngerstreuer in der Ansicht schräg von hinten in perspektivischer Darstellung,
- Fig. 2: die Gelenkanordnung für den klappbaren Bügel in der Ansicht II - II,
- Fig. 3: das Gelenk in der Ansicht III - III,
- Fig. 4: einen weiteren Schleuderdüngerstreuer in der Draufsicht und in Prinzipdarstellung,
- Fig. 5: einen weiteren Schleuderdüngerstreuer in der Seitenansicht und in Prinzipdarstellung und
- Fig. 6: einen weiteren Schleuderdüngerstreuer in der Ansicht von hinten.

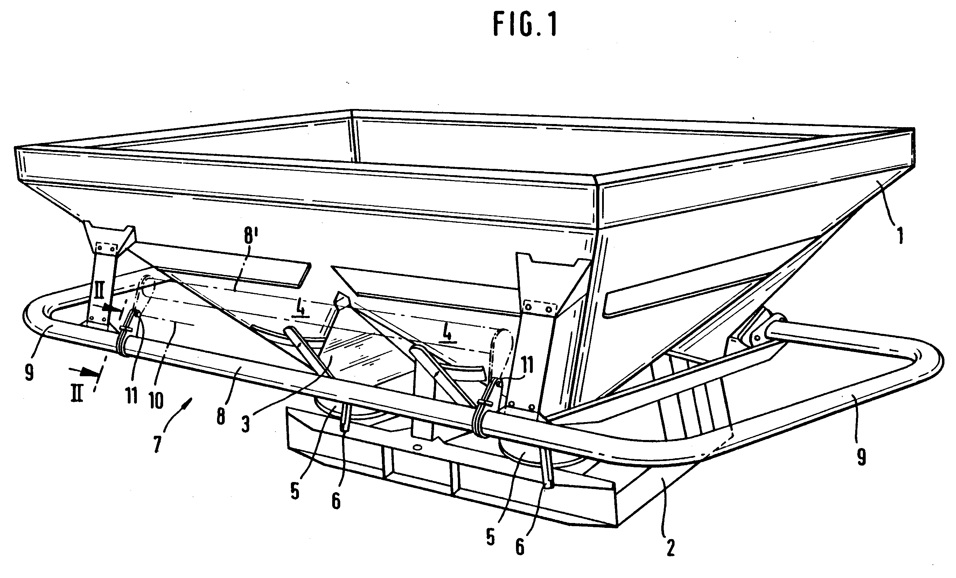

Der Schleuderdüngerstreuer gemäß Fig. 1 weist den Vorratsbehälter 1 und den Rahmen 2 auf. Auf der Vorderseite des Rahmens 2 sind in bekannter und nicht näher dargestellter Weise Dreipunktkupplungselemente zum Anbau des Schleuderdüngerstreuers an den Schlepperkraftheber angeordnet. Durch das dachförmige Mittelteil 3 ist der Vorratsbehälter in seinem unteren Bereich in die Auslauftrichter 4 aufgeteilt.

Unterhalb der Auslauftrichter 4 befinden sich die Dosierorgane und die Schleuderscheiben 5 mit den Wurfschaufeln 6. Die Schleuderscheiben 5 werden von einem nicht dargestellten Antrieb in bekannter Weise rotierend angetrieben. Am Rahmen 2 und am Vorratsbehälter 1 ist der Schutzbügel 7 angeordnet. Dieser Schutzbügel befindet sich in der Draufsicht gesehen außerhalb der äußeren Umlaufbahnen der äußeren Teile der Schleuderscheiben 5 und der äußeren Teile der Wurfschaufeln 6.

Der mittlere Teil 8 des Bügels 7 ist gegenüber den äußeren Teilen 9 des Schutzbügels 7 um die quer zur Fahrtichtung verlaufende Schwenkachse 10 nach oben in die mit strichpunktierten Linien dargestellte Stellung 8' wegschwenkbar. Hierzu ist der Schutzbügel 7 an zwei Stelle getrennt, so daß der mittlere Teil 8 nach oben in die Position 8' wegklappbar ist. Hierdurch wird eine gute Zugänglichkeit zu den Schleuderscheiben 5 erreicht, so daß die Wurfschaufeln 6 auf den Schleuderscheiben 5 einfach eingestellt werden können Weiterhin wird eine gute Zugänglichkeit zu der Mengeneinstellung der Dosierorgane erreicht.

Die Gelenke 11 sind als Friktionsgelenke ausgebildet. An dem Seitenteil 9 des Bügels 7 ist der Gelenkhebel 12 angeschweißt. An dem Mittelteil 8 ist der Gelenkhebel 13 angeschweißt. Diese beiden Gelenkhebel 12 und 13 sind in dem Gelenk 11 über die Schraube 14 miteinander verbunden. Die Schraube 14 weist die selbstsichernde Mutter 15 auf.

Zwischen den beiden Gelenkhebeln 12 und 13 befindet sich die Tellerfeder 16. Durch entsprechendes Anziehen der selbstsichernden Mutter 15 auf der Schraube 14 ergibt sich ein Friktionsgelenk, so daß der mittlere Teil 8 des Schutzbügels 7 in jeder Stellung stehen bleibt. Damit der Schutzbügel in seiner Arbeitsstellung, die Fig. 1 mit durchgezogenen Linien gezeigt, nicht nach unten fällt, ist an dem Hebel 13 ein Anschlagelement 17 angeordnet, welches über den Hebel 12 faßt.

Dieses Anschlagelement 17, ist in der Rückenansicht gesehen, U-fömig ausgebildet, so daß es mit seinem einen Schenkel an dem Gelenkhebel 13 angeschweißt ist. Der andere Schenkel 18 des Anschlagelementes 17 faßt über den Gelenkhebel 12. Somit hält das Element 17 die beiden Gelenkhebel 12 und 13 zusammen. Desweiteren wird hierdurch erreicht, daß der Schutzbügel in der eingeklappten Stellung so verriegelt ist, daß alle horizontalen Stöße, die bei der Fahrt durch Anstoßen an Hindernissen erzeugt werden, von der einen Bügelseite auf die andere Bügelseite übertragen werden. Hierdurch wird eine große Stabilität des Schutzbügels 7 erreicht.

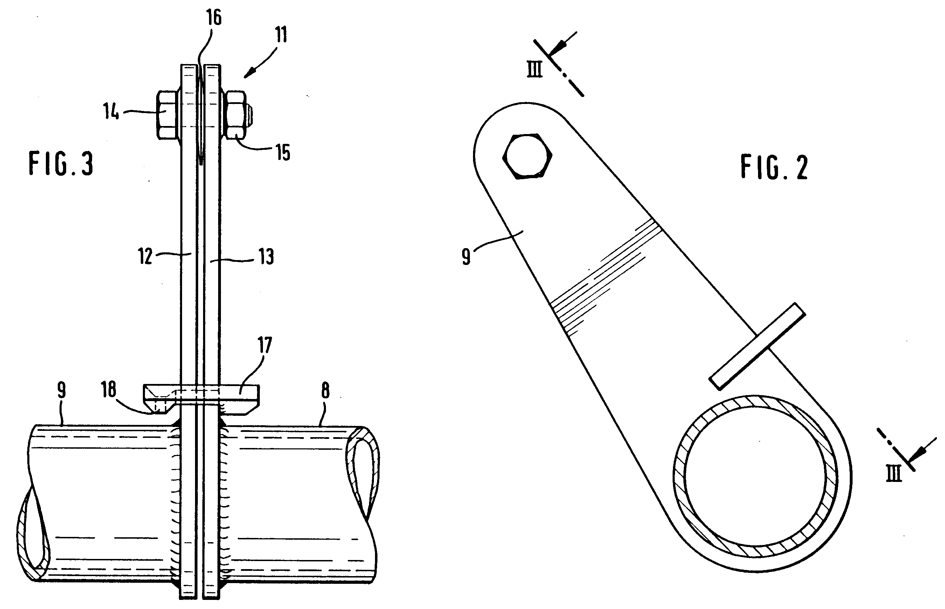

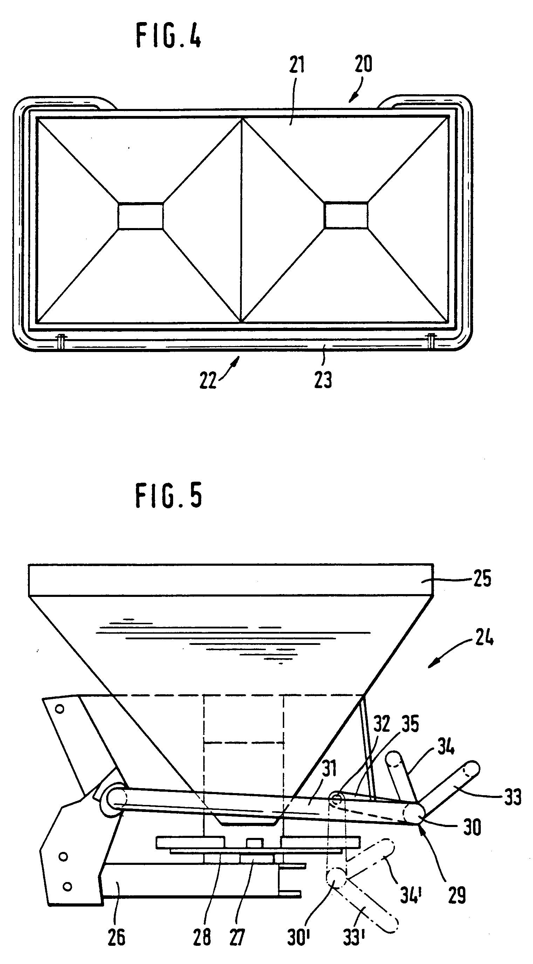

Die Fig. 4 zeigt einen weiteren Schleuderdüngerstreuer in der Draufsicht Dieser Schleuderdüngerstreuer 20 weist den Vorratsbehälter 21 auf. Diesem Schleuderdüngerstreuer 21 ist ein Schutzbügel 22 zugeordnet, der, in der Draufsicht gesehen, den Vorratsbehälter seitlich und nach hinten überragt. Somit dient dieser Schutzbügel 22 als Rammschutz für den Schleuderdüngerstreuer 20, so daß bei einem Anstoßen an Hindernisse der Vorratsbehälter 21 und andere Teile des Schleuderstreuers 20 nicht beschädigt werden können. Der hintere mittlere Teil 23 des Schutzbügels 22 ist wiederum wegklappbar, wie in den Fig. 1 bis 3 beschrieben ist.

Die Fig. 5 zeigt einen weiteren Schleuderdüngerstreuer 24 mit dem Vorratsbehälter 25 und dem Rahmen 26. An dem Rahmen 26 sind die Getriebeeinheiten 27 für die Schleuderscheiben 28 angeordnet. Desweiteren ist an dem Rahmen 26 und dem Vorratsbehälter 25 der Schutzbügel 29 angeordnet. Der hintere Teil 30 des Schutzbügels ist gegenüber den Seitenteilen 31 und den Schleuderscheiben 28 nach unten um die in Fahrtrichtung verlaufende Gelenkachse 32 schwenkbar. Der hintere Teil 30 des Schutzbügels 29 ist nach unten in die mit strichpunktierten Linien angedeutete Stellung 30' schwenkbar. Desweiteren sind an dem wegklappbaren Teil 30 des Schutzbügels 29 weitere kurze Bügel 33 und 34 angeordnet. Der zusätzliche Bügel 33 dient als Abstellstütze 33', wie mit strichpunktierten Linien angedeutet ist. Somit dient der nach oben klappbare Teil 30' in Verbindung mit dem Teil 31' als Sicherheitsstütze, so daß bei angehobenen Schleuderstreuern, wenn die Dosierorgane und die Wurfschaufeln auf der Schleuderscheibe 28 eingestellt werden sollen, der Schleuderdüngerstreuer bei einem Ausfall der Hydraulikanlage des Schlepperkrafthebers nicht nach unten fallen kann. Verletzungen von Bedienungspersonen werden somit vermieden. Die Gelenkachse 32 sowie die Länge der Gelenkhebel 35 kann so gewählt werden, daß der hintere Teil 30 des Bügel in nach unten geklappter Stellung gleichzeitig als Sicherheitsstütze dienen kann, wenn er die Unterkante des Rahmens 26 des Schleuderdüngerstreuers nach unten überragt.

Desweiteren ist an dem mittleren klappbaren Teil des Bügels 30 ein weiteren Bügel 34 angeordnet. Dieser Bügel 34 dient, wie mit strichpunktierten Linien angedeutet, in der Stellung 34' als Stufen, so daß die Bedienungsperson ähnlich wie bei einer Leiter an der Maschine hochsteigen kann, um so bequem in den Vorratsbehälter 25 schauen zu können. In nach oben geklapptem Zustand des mittleren Bügels 30 können die Bügel 33 und 34 ebenfalls als Trittstufen für eine Bedienungsperson benutzt werden.

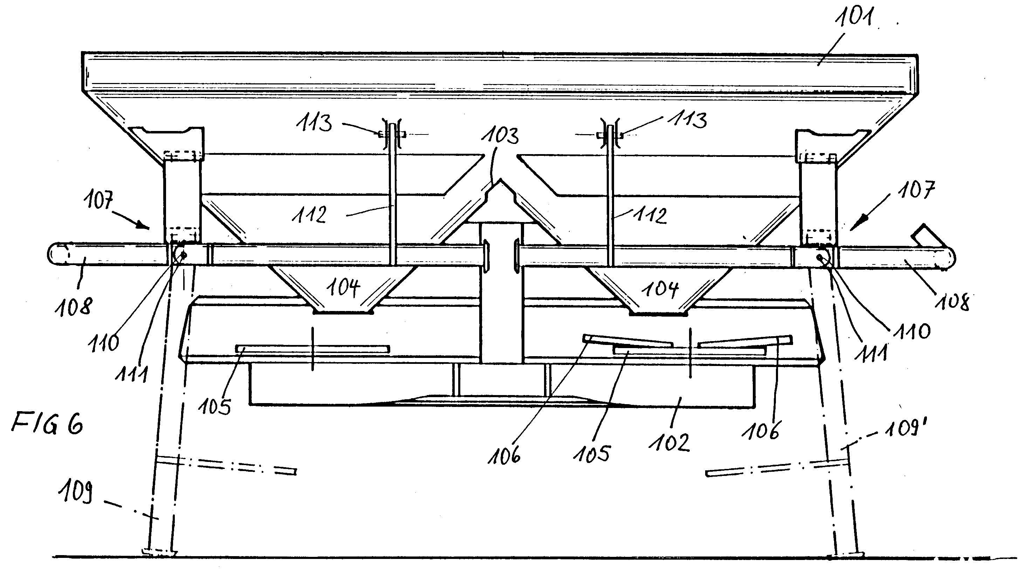

Der Schleuderdüngerstreuer gemäß Fig. 6 weist den Vorratsbehälter 101 und den Rahmen 102 auf. Auf der Vorderseite des Rahmens 102 sind in bekannter und daher nicht näher dargestellter Weise Dreipunktkupplungselemente zum Anbau des Schleuderdüngerstreuer an den Schlepperkraftheber angeordnet. Durch das dachförmige Mittelteil 103 ist der Vorratsbehälter 101 in seinem unteren Bereich in die Auslauftrichter 104 aufgeteilt.

Unterhalb der Auslauftrichter 104 befinden sich die Dosierorgane und die Schleuderscheiben 105 mit den Wurfschaufeln 106. Die Schleuderscheiben 105 werden von einem nicht dargestellten Antrieb in bekannter Weise rotierend angetrieben. Am Rahmen 102 und am Vorratsbehälter 101 ist der Schutzbügel 107 angeordnet. Dieser Schutzbügel befindet sich in der Draufsicht gesehen außerhalb der äußeren Umlaufbahn der äußeren Teile der Schleuderscheiben 105 und der äußere Teile der Wurfschaufeln 106.

Die äußeren Teile 108 sind fest an dem Vorratsbehälter 101 und dem Rahmen 102 befestigt. Der hintere Teil des Schutzbügels 107 ist in die beiden schwenkbaren Teile 109 aufgeteilt. Die hintere Teil des Schutzbügels 107 ist hierzu in Schleuderdüngerstreuermitte geteilt. Die beiden Teile 109 sind jeweils mittels eines Schwenklagers 110 an den äußeren Teilen 108 des Rohrbügels 107 schwenkbar befestigt. Die Schwenkachsen 111, welche durch das Schwenklager 110 jeweils verlaufen, verlaufen etwa in Fahrtrichtung.

An den Teilen 109 sind die Halterungen 112 befestigt, welche zur Fixierung der Schutzbügelteile 109 in ihrer Betriebsstellung dienen. Mittels des Schnellverschlusses 113 und in Verbindung mit der Halterung 112 werden die klappbaren Teile 109 des Schutzbügels 107 in ihrer Betriebsstellung gehalten.

Nach Lösen des Schnellverschlusses 113 können die klappbaren Teile 109 des Schutzbügels 107 um die Schwenkachse 111 in den mit strichpunktierten Linien dargestellten aufrechten Stellungen 109' verschwenkt werden . In dieser Position 109' dienen die Schutzbügelteile 109 als Abstützsicherheitselemente.

Diese nach unten klappbaren Teile 109 des Schutzbügels 107 weisen eine derartige Länge auf, daß die Höhe des Schleuderdüngerstreuers im abgesetzten Zustand auf diesen schützenden Bügelteilen 109, wie in der Zeichnung dargestellt, der Lage der Anbauhöhe des Streuers für die Streuerbreite entspricht. Für die normale Einstellarbeit wird man den Düngerstreuer etwa soweit anheben, daß sich die unteren Enden des Schutzbügels etwa 5 - 10 cm über der Bodenoberfläche befinden.

## Patentansprüche

1. Schleuderdüngerstreuer mit einem Rahmen (2) und Vorratsbehälter (1), unter dem angetriebene Schleuderscheiben (5) angeordnet sind, wobei der Maschine ein Bügel (7,22,29), insbesondere Schutzbügel zugeordnet ist, welcher in Draufsicht gesehen sich außerhalb der äußeren Umlaufbahnen der äußeren Teile der Schleuderscheiben (5) befindet, dadurch gekennzeichnet, daß der Bügel (7,22,29) zumindest teilweise wegnehmbar oder wegklappbar gegenüber den Schleuderscheiben (5) ausgebildet ist.

2. Schleuderdüngerstreuer nach Anspruch 1, dadurch gekennzeichnet, daß der Bügel (7,22,29) um eine quer zur Fahrtrichtung verlaufende Achse (10) wegklappbar angeordnet ist.

3. Schleuderdüngerstreuer nach Anspruch 1, dadurch gekennzeichnet, daß der Bügel mittels eines Schnellverschlusses leicht abnehmbar angeordnet ist.

4. Schleuderdüngerstreuer nach einem oder mehreren der vorstehenden Ansprüche, dadurch gekennzeichnet, daß der Bügel (7,22,29) auf der Rückseite der Maschine zumindest an einer Stelle geteilt ist und somit wegklappbar der wegnehmbar ist.

5. Schleuderdüngerstreuer nach einem oder mehreren der vorstehenden Ansprüche, dadurch gekennzeichnet, daß der Schutzbügel (7,22,29) an zwei Stellen getrennt ist, daß der mittlere hintere Teil (8,23,30) des Bügels (7,22,29) um eine quer zur Fahrtrichtung verlaufende Achse (10) nach oben oder nach unten wegklappbar ist.

6. Schleuderdüngerstreuer nach einem oder mehreren der vorstehenden Ansprüche, dadurch gekennzeichnet, daß die Seitenteile des Bügels wegklappbar oder wegnehmbar sind.

7. Schleuderdüngerstreuer nach einem oder mehreren der vorstehenden Ansprüche, dadurch gekennzeichnet, daß der Bügel wegschiebbar an der Maschine angeordnet ist.

8. Schleuderdüngerstreuer nach einem oder mehreren der vorstehenden Ansprüche, dadurch gekennzeichnet, daß das(die) Gelenk(e) (11), um welche(s) die klappbaren Teilen (8,9,23,30) klappbar angeordnet sind, als Friktionsgelenk(e) ausgebildet ist(sind).

9. Schleuderdüngerstreuer nach einem oder mehreren der vorstehenden Ansprüche, dadurch gekennzeichnet, daß zwischen den zueinander klappbaren Teilen (8,9,23,30) des Bügels (7,22,29) im Bereich der Gelenke (11,32) eine Tellerfeder (16) angeordnet ist.

10. Schleuderdüngerstreuer nach einem oder mehreren der vorstehenden Ansprüche, dadurch gekennzeichnet, daß der Schutzbügel (7,22,29) in seiner Schutz- oder Arbeitsstellung so verriegelt ist, daß zumindest alle horizontalen Kräfte (Stöße durch die Fahrt) von einer Bügelseite (9,31) auf die andere übertragen werden.

11. Schleuderdüngerstreuer nach einem oder mehreren der vorstehenden Ansprüche, dadurch gekennzeichnet, daß der Schutzbügel (7,22,29) in der Draufsicht gesehen den Vorratsbehälter (1,21,25) seitlich und nach hinten überragt.

12. Schleuderdüngerstreuer nach einem oder mehreren der vorstehenden Ansprüche, dadurch gekennzeichnet, daß der Bügel (29) teilweise oder ganz nach unten klappbar ist und zwar derart, daß er gleichzeitig als Abstellstütze (30',33') dient.

13. Schleuderdüngerstreuer nach Anspruch 1, dadurch gekennzeichnet, daß zumindest Teile (109) des Schutzbügels (107) um eine zumindest annähernd in Fahrtrichtung verlaufende Schwenkachse (111) nach unten in eine aufrechte Stellung (109) klappbar sind.

14. Schleuderdüngerstreuer nach Anspruch 13, dadurch gekennzeichnet, daß der Schutzbügel (107) etwa in Schleuderdüngerstreuermitte geteilt ist und daß die beiden Teile (109) des Schutzbügels (107) um eine im äußeren Bereich des Schleuderdüngerstreuers liegende Schwenkachse (111) nach unten schwenkbar sind.

15. Schleuderdüngerstreuer nach einem oder mehreren der vorstehenden Ansprüche, dadurch gekennzeichnet, daß an dem Schutzbügel (107) eine Halterung (112) zur Fixierung des Schutzbügels (107) in seiner Betriebsstellung angeordnet ist, und daß diese Halterung (112) gleichzeitig als Sitz ausgebildet ist.

16. Schleuderdüngerstreuer nach einem oder mehreren der vorstehenden Ansprüche, dadurch gekennzeichnet, daß die nach unten klappbaren Teile (109) des Schutzbügels (107) eine derartige Länge aufweisen, daß die Höhe des Schleuderdüngerstreuers im abgestellten Zustand auf diesen Teilen (109) des Schutzbügels (107) der Lage der Anbauhöhe des Streuers für die Streuarbeit entspricht.

17. Schleuderdüngerstreuer nach einem oder mehreren der vorstehenden Ansprüche, dadurch gekennzeichnet, daß die unteren Enden des Schutzbügels sich etwa 5 - 10 cm über der Bodenoberfläche befinden.

## Claims

1. Centrifugal fertiliser broadcaster, including a frame (2) and hopper (1), beneath which are disposed driven centrifugal discs (5), a rail (7, 22, 29), more especially a guard rail, being associated with the machine, which rail, when viewed from above, is situated outwardly of the outer circular paths of the outer portions of the centrifugal discs (5), characterised in that the rail (7, 22, 29) is configured to be at least partially removable or pivotable out of the way of the centrifugal discs (5).

2. Centrifugal fertiliser broadcaster according to claim 1, characterised in that the rail (7, 22, 29) is disposed so as to be pivotable out of the way about an axis (10), which extends transversely relative to the direction of travel.

3. Centrifugal fertiliser broadcaster according to claim 1, characterised in that the rail is disposed so as to be easily removable by means of a quick-release closure.

4. Centrifugal fertiliser broadcaster according to one or more of the preceding claims, characterised in that the rail (7, 22, 29) is divided at at least one location on the rear of the machine and can, in consequence, be pivoted out of the way or removed.

5. Centrifugal fertiliser broadcaster according to one or more of the preceding claims, characterised in that the guard rail (7, 22, 29) is separated at two locations, and in that the central rear portion (8, 23, 30) of the rail (7, 22, 29) is pivotable out of the way upwardly or downwardly about an axis (10), which extends transversely relative to the direction of travel.

6. Centrifugal fertiliser broadcaster according to one or more of the preceding claims, characterised in that the lateral portions of the rail are pivotable out of the way or removable.

7. Centrifugal fertiliser broadcaster according to one or more of the preceding claims, characterised in that the rail is disposed on the machine so as to be slidable out of the way.

8. Centrifugal fertiliser broadcaster according to one or more of the preceding claims, characterised in that the joint(s) (11), about which the pivotable portions (8, 9, 23, 30) are pivotably disposed, is (are) configured as a friction joint (as friction joints).

9. Centrifugal fertiliser broadcaster according to one or more of the preceding claims, characterised in that a plate spring (16) is disposed between the portions (8, 9, 23, 30) of the rail (7, 22, 29), which are pivotable relative to one another, in the region of the joints (11, 32).

10. Centrifugal fertiliser broadcaster according to one or more of the preceding claims, characterised in that the guard rail (7, 22, 29) is locked in its protective or operating position in such a manner that at least all of the horizontal forces (impacts resulting from travel) are transmitted from one side of the rail (9, 31) to the other.

11. Centrifugal fertiliser broadcaster according to one or more of the preceding claims, characterised in that the guard rail (7, 22, 29), when viewed from above, protrudes laterally and rearwardly beyond the hopper (1, 21, 25).

12. Centrifugal fertiliser broadcaster according to one or more of the preceding claims, characterised in that the rail (29) is partially or wholly pivotable downwardly such that it simultaneously serves as a support (30', 33').

13. Centrifugal fertiliser broadcaster according to claim 1, characterised in that at least portions (109) of the guard rail (107) are pivotable downwardly into an upright position (109) about a pivot axis (111), which extends at least approximately in the direction of travel.

14. Centrifugal fertiliser broadcaster according to claim 13, characterised in that the guard rail (107) is divided substantially in the centre of the centrifugal fertiliser broadcaster, and in that the two portions (109) of the guard rail (107) are pivotable downwardly about a pivotal axle (111), which is situated in the external region of the centrifugal fertiliser broadcaster.

15. Centrifugal fertiliser broadcaster according to one or more of the preceding claims, characterised in that a holder (112) is disposed on the guard rail (107) for the securement of the guard rail (107) in its operating position, and in that this holder (112) is simultaneously configured as a seat.

16. Centrifugal fertiliser broadcaster according to one or more of the preceding claims, characterised in that the downwardly pivotable portions (109) of the guard rail (107) are of such a length that the height of the centrifugal fertiliser broadcaster, when supported on these portions (109) of the guard rail (107), corresponds to the position of the height of attachment of the broadcaster for the broadcasting operation.

17. Centrifugal fertiliser broadcaster according to one or more of the preceding claims, characterised in that the lower ends of the guard rail are situated substantially 5 - 10 cm above the ground surface.

## Revendications

1. Epandeur centrifuge d'engrais comprenant un châssis (2) et un réservoir d'alimentation (1) sous lequel se trouvent des disques d'épandage (5), entraînés, la machine ayant un arceau (7, 22, 29) notamment un arceau de protection qui, en vue de dessus, se trouve à l'extérieur des trajectoires extérieures des pièces extérieures des disques d'épandage (5), épandeur caractérisé en ce que l'arceau (7, 22, 29) est au moins partiellement amovible ou se dégage par basculement par rapport aux disques d'épandage.(5).

2. Epandeur centrifuge d'engrais selon la revendication 1, caractérisé en ce que l'arceau (7, 22, 29) peut être écarté par basculement autour d'un axe (10) transversal à la direction de déplacement.

3. Epandeur centrifuge d'engrais selon la revendication 1, caractérisé en ce que l'arceau est monté de manière facilement amovible par l'intermédiaire d'un dispositif de liaison rapide.

4. Epandeur centrifuge d'engrais selon une ou plusieurs des revendications précédentes, caractérisé en ce que l'arceau (7, 22, 29) est divisé sur le côté arrière de la machine, au moins en un endroit et peut ainsi s'écarter par basculement ou s'enlever.

5. Epandeur centrifuge d'engrais selon une ou plusieurs des revendications précédentes, caractérisé en ce que l'arceau de protection (7, 22, 29) est divisé en deux endroits, la partie arrière centrale (8, 23, 30) de l'arceau (7, 22, 29) pouvant s'écarter par basculement vers le haut ou vers le bas, autour d'un axe (10) transversal à la direction de déplacement.

6. Epandeur centrifuge d'engrais selon une ou plusieurs des revendications précédentes, caractérisé en ce que les parties latérales de l'arceau peuvent s'écarter par basculement ou s'enlever.

7. Epandeur centrifuge d'engrais selon une ou plusieurs des revendications précédentes, caractérisé en ce que l'arceau est monté sur la machine de manière à pouvoir s'écarter par coulissement.

8. Epandeur centrifuge d'engrais selon une ou plusieurs des revendications précédentes, caractérisé en ce que la ou les articulations (11) autour desquelles les parties basculantes (8, 9, 23, 30) peuvent basculer sont réalisées sous la forme d'articulations à friction.

9. Epandeur centrifuge d'engrais selon une ou plusieurs des revendications précédentes, caractérisé en ce qu'entre les parties basculantes (8, 9, 23, 30) de l'arceau (7, 22, 29), dans la zone des articulations (11, 32), on a un ressort Belleville (10).

10. Epandeur centrifuge d'engrais selon une ou plusieurs des revendications précédentes, caractérisé en ce que l'arceau de protection (7, 22, 29) se verrouille pour qu'au moins toutes les forces horizontales (chocs engendrés par le déplacement) soient transmises d'un côté de l'arceau (9, 31) à l'autre.

11. Epandeur centrifuge d'engrais selon une ou des plusieurs des revendications précédentes, caractérisé en ce que l'arceau de protection (7, 22, 29) dépasse latéralement et vers l'arrière le réservoir (1, 21, 25) en vue de dessus.

12. Epandeur centrifuge d'engrais selon une ou plusieurs des revendications précédentes, caractérisé en ce que l'arceau (29) peut être basculé vers le bas, en partie ou en totalité et cela de façon à servir en même temps d'appui (30', 33').

13. Epandeur centrifuge d'engrais selon la revendication 1, caractérisé en ce qu'au moins des parties (109) de l'arceau de protection (107) puissent être basculées vers le bas en position verticale (109), autour d'un axe de basculement (111) qui est au moins pratiquement dirigé dans la direction de déplacement.

14. Epandeur centrifuge d'engrais selon la revendication 13, caractérisé en ce que l'arceau de protection (107) est divisé sensiblement au milieu de l'épandeur centrifuge et en ce que les deux parties (109) de l'arceau de protection (107) puissent être basculées vers le bas autour d'un axe de basculement (111) qui se situe dans la zone extérieure de l'épandeur centrifuge d'engrais.

15. Epandeur centrifuge d'engrais selon une ou plusieurs des revendications précédentes, caractérisé en ce qu'un moyen de fixation (112) pour bloquer l'arceau de protection (107) en position de travail est prévu sur cet arceau de protection (107) et ce moyen de fixation (112) forme en même temps un siège.

16. Epandeur centrifuge d'engrais selon une ou plusieurs des revendications précédentes, caractérisé en ce que les parties (109) de l'arceau de protection (107) basculé vers le bas ont une longueur telle que la hauteur de l'épandeur centrifuge, en position déposée sur ces parties (109) de l'arceau de protection (107) corresponde à la hauteur de montage de l'épandeur pour le travail d'épandage.

17. Epandeur centrifuge d'engrais selon une ou plusieurs des revendications précédentes, caractérisé en ce que les extrémités inférieures de l'arceau de protection se trouvent sensiblement à 5-10 cm au-dessus de la surface du sol.
